# EUROPÄISCHE PATENTANMELDUNG

(11) **EP 4 333 569 A2**
(43) Veröffentlichungstag der Anmeldung: **06.03.2024**
(21) Anmeldenummer: 24151371.2
(22) Anmeldetag: 07.02.2020
(51) Int. Cl.: H05K 5/00

(54) **SENSORÜBERWACHTE STECKSCHNITTSTELLE IN EINEM DURCHFÜHRUNGSGEHÄUSE**

(30) Priorität: 11.02.2019 DE 102019103260
(62) Teilanmeldung aus: 20709127.3
(71) Anmelder: HARTING Electric Stiftung & Co. KG, 32339 Espelkamp (DE)
(72) Erfinder: Hellige, Denny, 32549 Bad Oeynhausen (DE); Behning, Christian, 32457 Porta Westfalica (DE); Bohne, Christian, 49448 Lemförde (DE)

(57) **Zusammenfassung**

Die Erfindung bezieht sich auf ein Durchführungsgehäuse, welches im Bahnbereich eingesetzt wird, wobei das Durchführungsgehäuse (1) zumindest eine Steckschnittstelle (4) aufweist, die Steckverbindermodule (5, 5') aufweist, wobei die Steckschnittstelle (4) außerdem zumindest zwei Sensoren, einen ersten Sensor und einen zweiten Sensor, aufweist, wobei das Durchführungsgehäuse eine Sensorbox (7) aufweist, welche zumindest zwei Sensoren, einen dritten Sensor und einen vierten Sensor, aufweist. Im Verfahren zur ganzheitlichen Überwachung von mehreren Steckschnittstellen (4) der Wagons (8, 8', 8") eines Zuges 9 ist vorgesehen:
a. dass von den Steckschnittstellen (4) jeweils erste Daten von jeweils mehreren Sensoren generiert werden,
b. wobei die an den jeweiligen Steckschnittstellen (4) generierten ersten Daten an eine mit der Steckschnittstelle (4) datentechnisch verbundene Sensorbox (7) gesendet werden,
c. wobei von den Sensoren der Sensorbox (7) zweite Daten generiert werden,
d. wobei die ersten und zweiten Daten gemeinsam von der Sensorbox (7) über eine Switchinfrastruktur (11, 11', 11 ") zu einer zentralen Auswerteeinheit (12) und/oder zu einer zentralen Überwachungsstelle (13) gesendet werden,
e. wobei von der zentralen Auswerteeinheit und/oder von der zentralen Überwachungsstelle (13) aus den ersten und zweiten Daten ein digitaler Zwilling des mehrere Wagons (8, 8', 8") umfassenden Zuges (9) errechnet wird.

## Beschreibung

Die Erfindung geht aus von einem sensorüberwachten Durchführungsgehäuse zum Einbau in einen Wagon eines Zuges nach der Gattung des unabhängigen Anspruchs 1.

Derartige Steckschnittstellen sind insbesondere in Durchführungsgehäusen integriert. Durchführungsgehäuse werden benötigt, um Leitungen bzw. Kabel aus einem geschlossenen Bereich heraus in einen anderen Bereich zu führen oder umgekehrt.

### Stand der Technik

Die DE 102 30 379 A1 zeigt eine Elektrokontaktkupplung, umfassend ein erstes und ein zweites Kontaktträgergehäuse, die jeweils einen ersten bzw. zweiten Kontaktträger für erste bzw. zweite Kontaktelemente aufnehmen, die beim Einkuppeln in elektrischen Kontakt miteinander treten.

Die EP 2 746 129 A1 zeigt eine Steckerverbindungseinheit geeignet für den Einsatz in einer Elektrokontakt-Kupplung eines schienengebundenen Fahrzeugs, insbesondere Zug, zur Verbindung einer Vielzahl von Kabeln zweier Fahrzeugteile, zur Übertragung elektrischer Impulse und/oder Leistungen, umfassend einen Träger und eine Vielzahl daran befestigter Kontakte.

Die DE 10 2013 016550 A1 zeigt eine elektrische Koppelungseinheit für eine elektrische Steckverbindung, insbesondere ein Ladestecker für ein Elektrofahrzeug, umfassend einen Steckverbinder mit zumindest zwei Kontaktelementen und ein Sensormodul zur Übermittlung von im Rahmen der Überwachung gewonnenen Informationen.

Die DE 10 2010 052667 A1 zeigt eine Vorrichtung zur Erfassung von Störungen einer Rollbewegung eines Wagonrades eines Zuges umfassend eine einen Vibrationssensor umfassende Auswerteeinheit.

Die WO 03/029059 A1 zeigt einen Entgleisungsdetektor für ein Fahrzeug, der in einem Gehäuse zur Befestigung an dem Fahrzeug angeordnet ist.

Die DE 10 2005 022 281 A1 zeigt eine elektronische Einheit umfassend ein Gehäuse, einen in dem Gehäuse aufgenommenen elektronischen Schaltkreis, einen an dem Gehäuse angesetzten Verbinder, wobei der Verbinder Signalanschlüsse aufweist, die mit dem elektronischen Schaltkreis verbunden sind, und ein RFID-Etikett mit einer Antennenvorrichtung, welches an dem Verbinder angebracht ist.

Die EP 2 845 277 A2 zeigt ein Durchführungsgehäuse. Das Durchführungsgehäuse weist eine Steckschnittstelle auf, die Kontaktelemente zur Strom- und/oder Signalübertragung aufweist. An die Steckschnittstelle kann ein Steckverbinder angeschlossen werden.

Derartige Durchführungsgehäuse werden insbesondere im Bahnbereich eingesetzt, um die Wagons eines Zuges untereinander mit Leitungen zu verbinden. Die Leitungen können stromführend sein. Es sind in der Regel aber auch signalführende Leitungen (LWL-Leitungen) vorgesehen.

Die Steckschnittstellen zwischen den Wagons müssen regelmäßig revidiert und ggf. vorsorglich ausgetauscht werden. Dadurch entstehen hohe Wartungskosten.

Das Deutsche Patent- und Markenamt hat in der Prioritätsanmeldung zu vorliegender Anmeldung den folgenden Stand der Technik recherchiert: WO 2013/169650 A1 und WO 2015/148042 A1.

### Aufgabenstellung

Die Aufgabe der Erfindung besteht darin Steckschnittstellen für Wagons eines Zuges bereitzustellen, deren Wartungsaufwand gering ist und die gleichzeitig zuverlässig sind.

Die Aufgabe wird durch die Merkmale der unabhängigen Ansprüche gelöst.

Vorteilhafte Ausgestaltungen der Erfindung sind in den jeweiligen Unteransprüchen angegeben.

Das sensorüberwachte Durchführungsgehäuse weist zumindest eine Steckschnittstelle auf. Die Steckschnittstelle besteht im Wesentlichen aus einer im Durchführungsgehäuse befindlichen Ausnehmung, in welcher ein mit Steckverbindermodulen bestückter Halterahmen eingebaut ist. Aus der Druckschrift EP 0 860 906 B1 ist ein solcher Halterahmen zur Halterung von Steckverbindermodulen und zum Einbau in die besagten Ausnehmungen bekannt.

Die Steckverbindermodule weisen Kontaktelemente auf. Die Kontaktelemente dienen zur Strom- und/oder Signalübertragung. Außerdem weist die Steckschnittstelle zumindest zwei Sensoren, einen ersten Sensor und einen zweiten Sensor, auf. Die Sensoren können beispielsweise ebenfalls in Steckverbindermodulen integriert sein. Alternativ kann die Steckschnittstelle lediglich über Leitungen mit externen Sensoren verbunden sein, die sich beispielsweise in der Nähe des Fahrwerks des Wagons befinden.

Im Durchführungsgehäuse ist eine Sensorbox angeordnet. Innerhalb der Sensorbox sind wiederum zumindest zwei Sensoren, ein dritter Sensor und ein vierter Sensor, angeordnet.

Vorteilhafterweise sind die Steckschnittstelle und die Sensorbox datentechnisch miteinander verbunden. Die datentechnische Verbindung kann über Leitungen oder über eine Funk- bzw. WLAN-Verbindung realisiert sein. Die Beiden Sensorpaare (Paar 1: erster und zweiter Sensor) und (Paar 2: dritter und vierter Sensor) sind örtlich voneinander beabstandet. Dadurch können sich die Sensorpaare nicht gegenseitig negativ beeinflussen.

Vorzugsweise handelt es sich beim ersten Sensor um einen Temperatursensor und beim zweiten Sensor um einen Distanzsensor. Über den Temperatursensor können Gefahrenquellen, beispielsweise durch eine Erwärmung bei der Übertragung hoher Ströme, frühzeitig detektiert werden. Der Distanzsensor kann beispielsweise eine unkorrekte Steckung eines Steckverbinders in die Schnittstelle detektieren.

Es ist vorteilhaft, wenn es sich beim dritten Sensor um einen Vibrations- und Beschleunigungssensor und beim vierten Sensor um einen Feuchtigkeitssensor handelt. Über die vom Vibrationssensor gelieferten Daten können Voraussagen über die Lebensdauer der Steckschnittstelle getroffen werden. Durch die Daten des Feuchtigkeitssensors kann frühzeitig erkannt werden, dass beispielsweise die Dichtungen im Bereich der Steckschnittstelle nachlassen oder das Feuchtigkeit in den Kabelschlauch zwischen zwei Steckschnittstellen eindringt. Durch Feuchtigkeit können die Kontaktelemente der Steckverbindung frühzeitig korrodieren und ausfallen. Hier können dann frühzeitig geeignete Maßnahmen eingeleitet werden das Dichtigkeitsleck zu beheben. Durch die Daten aller Sensoren kann ein bedarfsgerechter Wartungsaufwand realisiert werden. Ein präventiver Austausch der Steckschnittstelle ist nicht mehr notwendig.

Bevorzugterweise weist die Sensorbox Mittel auf, mit denen die Daten des ersten Sensors, des zweiten Sensors, des dritten Sensors und des vierten Sensors erfassbar, speicherbar und weiterversendbar sind. Bei den Mitteln handelt es sich um eine Computerhardware, die einen Prozessor und einen Speicherbaustein aufweist. Die Daten werden vorteilhafterweise in der Sensorbox aufbereitet, indem Sie mit einem passenden Sprachprotokoll versehen werden. Das Sprachprotokoll ist an die jeweiligen Empfänger angepasst. Zum Versenden der Daten ist an der Sensorbox beispielsweise ein Wifi-Modul vorgesehen, so dass die Daten bzw. die aufbereiteten Daten per WLAN verschickt werden können.

Besonders vorteilhaft ist es, wenn von außen auf die Sensorbox zugegriffen werden kann und die Daten durch einen solchen Abruf abgerufen werden können. Die Daten sind dabei nach den aktuellen Sicherheitskriterien verschlüsselt. Ein autorisierter Dritter verfügt über den Schlüssel zur Entschlüsselung der Daten. Die Sensorbox verfügt in diesem Fall über die geeignete Hard- und Software.

Bei der Revision eines Zuges und dessen Wagons, werden die über die Steckschnittstellen verbundenen Wagons voneinander getrennt. Es ist sicherzustellen, dass die Steckverbinder, nebst dazwischen befindlichen Leitungen, anschließend wieder an die richtige Steckschnittstelle angeschlossen werden. In einer vorteilhaften Variante der Erfindung weist die Steckschnittstelle des Durchführungsgehäuses daher einen RFID-Transponder auf. Der an die jeweilige Steckschnittstelle zu steckende Steckverbinder könnte entsprechend mit einem RFID-Reader ausgestattet sein. Beim Stecken kann so festgestellt werden, ob der Steckverbinder an die richtige Steckschnittstelle gesteckt wurde.

Die Steckschnittstellen der Durchführungsgehäuse können wie folgt überwacht werden:
a. Zunächst werden von den Steckschnittstellen der Durchführungsgehäuse jeweils erste Daten von jeweils mehreren Sensoren generiert.
b. Anschließend werden die an den jeweiligen Steckschnittstellen generierten ersten Daten an eine mit der Steckschnittstelle datentechnisch verbundene und im Durchführungsgehäuse angeordnete Sensorbox gesendet.
c. Von den in der Sensorbox angeordneten Sensoren werden zeitgleich zweite Daten generiert.

Die von den Sensoren an die Sensorbox gelieferten ersten Daten und die von den Sensoren der Sensorbox generierten zweiten Daten werden in der Sensorbox gespeichert bzw. verarbeitet und weitergeleitet. Die gespeicherten bzw. erzeugten Daten können beispielsweise dazu genutzt werden, um ein Verschleißprofil des Zuges bzw. der Wagons zu erstellen und Ableitungen für einen möglichen Betriebsausfall daraus zu ziehen.
d. Die ersten und zweiten Daten werden gemeinsam von der Sensorbox an einen Switch gesendet.

Dafür ist eine geeignete Switchinfrastruktur vorgesehen.

Die Daten werden in bzw. von der Sensorbox aufbereitet, indem Sie mit einem passenden Sprachprotokoll versehen werden. In der Sensorbox sind dazu eine Vielzahl von Sprachprotokollen gespeichert bzw. verfügbar. Dadurch wird eine zuverlässige Netzwerkkommunikation, auch mit unterschiedlichen (Sprach)Teilnehmern, gewährleistet.

In einem Switch können Daten mehrerer Durchführungsgehäuse zusammenlaufen. In der Regel weist ein Wagon eines Zuges mehrere Durchführungsgehäuse und entsprechend dazu mehrere Steckschnittstellen auf. Alle Daten dieser Durchführungsgehäuse laufen in einem Switch zusammen.

Die ersten und zweiten Daten werden von dem Switch zu einer zentralen Auswerteeinheit und/oder einer zentralen Überwachungsstelle gesendet.

Die zentrale Auswerteeinheit kann sich im Zug befinden. Der Zug bzw. dessen Steuereinheit weist dafür eine geeignete Hard- und Software auf. Die zentrale Überwachungsstelle kann durch ein entsprechend computertechnisch ausgestattetes Gebäude des Zugbetreibers dezentral abgebildet werden.
e. Von der zentralen Auswerteeinheit wird aus den ersten und zweiten Daten ein digitaler Zwilling des mehrere Wagons umfassenden Zuges errechnet bzw. simuliert.

Der digitale Zwilling kann einerseits im Zug dargestellt werden. In diesem Fall können Betriebsparameter überwacht werden. Im Idealfall können frühzeitig Maßnahmen gegen einen Betriebsausfall, beispielsweise der Internetverbindung für die Bahnkunden, eingeleitet werden. Der digitale Zwilling kann von der zentralen Überwachungsstelle beispielsweise dazu genutzt werden, um effektive Wartungspläne zu generieren und Zugausfälle möglichst präventiv zu vermeiden.

### Ausführungsbeispiel

Ein Ausführungsbeispiel der Erfindung ist in den Zeichnungen dargestellt und wird im Folgenden näher erläutert. Es zeigen:
- Fig. 1: eine perspektivische Darstellung eines Durchführungsgehäuse,
- Fig. 2: eine Draufsicht einer Steckschnittstelle zum Einbau in das Durchführungsgehäuse und
- Fig. 3: eine schematische Darstellung eines Zuges.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

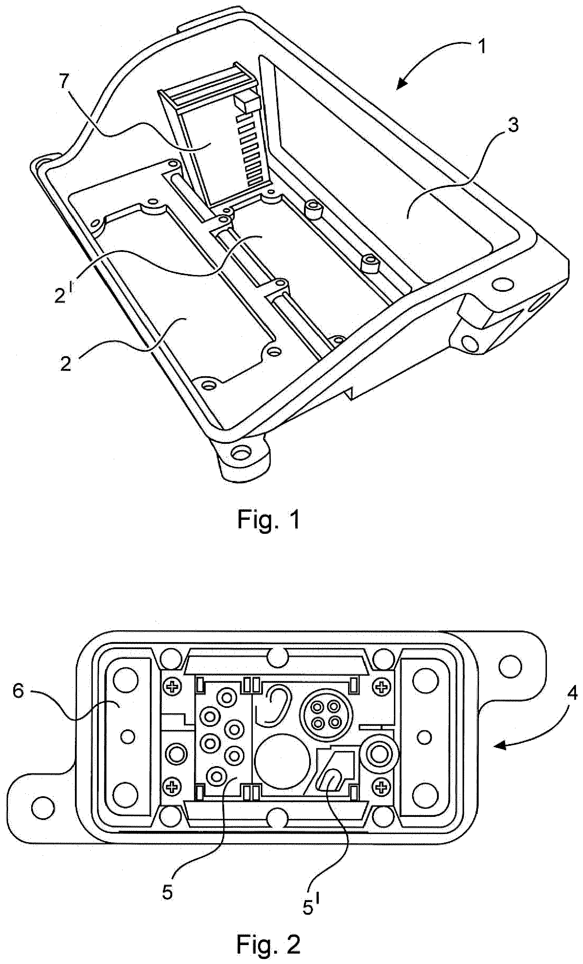

Die Figur 1 zeigt eine perspektivische Darstellung eines Durchführungsgehäuses 1, welches zum Einbau in einen Wagon 8, 8', 8" eines Zuges vorgesehen ist. Das Durchführungsgehäuse 1 weist zwei Ausnehmungen 2, 2' auf, in welchen jeweils eine Steckschnittstelle 4 eingebaut werden kann.

Die Steckschnittstelle 4 besteht im Wesentlichen aus einem Halterahmen 6, in welchem verschiedene Steckverbindermodule 5, 5' eingebaut sind. In die Steckschnittstelle 4 ist ein erster Sensor, ein Temperatursensor, und ein zweiter Sensor, ein Distanzsensor, integriert. Die Sensoren werden aus darstellerischen Gründen in Figur 2 nicht detailliert gezeigt.

Im Durchführungsgehäuse ist eine Leiterdurchführung 3 vorgesehen. Hierdurch werden die Leitungen in das Durchführungsgehäuse 1 eingeführt, die letztendlich mit der Steckschnittstelle 4 verbunden werden.

Im Durchführungsgehäuse 1 ist eine Sensorbox 7 angeordnet. In der Sensorbox 7 ist ein dritter Sensor, ein Vibrations- und Beschleunigungssensor, und ein vierter Sensor, ein Feuchtigkeitssensor, angeordnet. Die Sensorbox 7 ist datentechnisch, beispielsweise über eine elektrische Leitung, mit der bzw. den Steckschnittstellen 4 verbunden. In der Sensorbox laufen alle Daten, auch die der Steckschnittstelle 4, zusammen. Die Sensorbox 7 umfasst eine Computerhardware, so dass die gesammelten und generierten Daten gespeichert und verarbeitet werden können. Außerdem ist die Sensorbox 7 in der Lage die Daten innerhalb eines Netzwerks, beispielsweise per WLAN, zu versenden.

Zuvor werden die Daten mit einem dafür benötigten Sprachprotokoll aufbereitet. Im Speicher der Sensorbox 7 sind diverse unterschiedliche Sprachprotokolle hinterlegt, so dass die Sensorbox 7 mit unterschiedlichen Netzteilnehmern kommunizieren kann.

Von der Sensorbox 7 werden die Daten (alle Sensordaten) über eine Switchinfrastruktur 11, 11', 11" an eine zentrale Auswerteeinheit 12 im Zug und/oder an eine zentrale Überwachungsstelle 13 weiterleitet. An diesen Stellen wird ein digitaler Zwilling der Vernetzung des elektrischen Zuges 9, nebst Wagons 8, 8', 8", errechnet. Die zentrale Auswerteeinheit des Zuges befindet sich beispielsweise im Führerhaus. Hier kann direkt überwacht werden, ob sich alle Sensorparameter im Normbereich befinden.

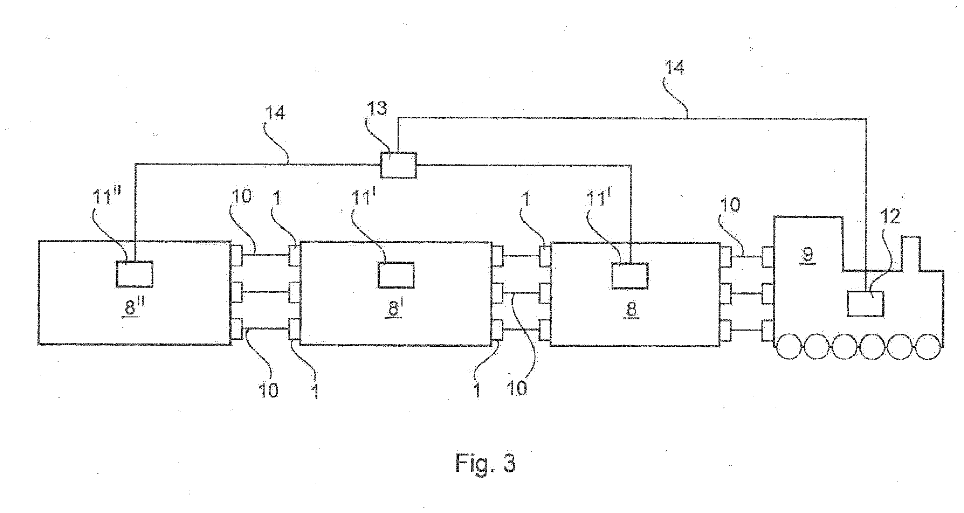

In Figur 3 ist eine schematische Darstellung eines Zuges 9 mit einzelnen Wagons 8, 8', 8" zu sehen. Jeder Wagon 8, 8', 8" verfügt über eine Mehrzahl von den oben beschriebenen Durchführungsgehäusen 1. Die einzelnen Wagons 8, 8', 8" sind über die Schnittstellen 4 der Durchführungsgehäuse 1 über eine Leitung 10 miteinander gekoppelt. In der Regel verlaufen eine Mehrzahl von Leitungen 10 von Durchführungsgehäuse 1 zu Durchführungsgehäuse 1, die in der Regel in einem Schlauch eingebettet sind. Hier ist lediglich jeweils nur eine Leitung 10 aus darstellerischen Gründen gezeigt.

Die im Durchführungsgehäuse 1 generierten Sensordaten werden, über die Sensorbox 7, an einen Switch 11, 11', 11" geleitet. Die Datenweiterleitung erfolgt über geeignete Datenleitungen 14, die nicht weiter beschrieben werden. In der Regel weist jeder Wagon 8, 8', 8" einen eigenen Switch 11, 11', 11" auf. Über den Switch 11, 11', 11" werden die Daten an eine zentrale Auswerteeinheit 12 im Zug 9 und an eine zentrale Überwachungsstelle 13 weiterleitet.

Sollten einzelne Parameter bzw. Messwerte den Normbereich verlassen, können schnell Maßnahmen dagegen eingeleitet werden. In der Regel sind diese Maßnahmen innerhalb des Zuges 9 jedoch beschränkt. Daher macht es Sinn, einen digitalen Zwilling des Zuges 9 auch an einer zentralen Überwachungsstelle 13 des Zugbetreibers, beispielweise der Deutschen Bahn, zu überwachen und daraus Ableitungen für die Wartung des Zuges 9 zu treffen. So können Systeme des Zuges 9 präventiv revidiert werden, wodurch die Zuverlässigkeit des Zuges 9 erhöht wird.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutierten Kombinationen nicht die einzig möglichen sind. Insbesondere können einander entsprechende Einheiten oder Merkmalskomplexe aus unterschiedlichen Ausführungsbeispielen miteinander ausgetauscht werden.

### Bezugszeichenliste

- 1: Vorrichtung
- 2: Durchführungsgehäuse
- 3: Leiterdurchführung
- 4: Steckschnittstelle
- 5: Steckverbindermodul
- 6: Halterahmen
- 7: Sensorbox
- 8: Wagon
- 9: Zug
- 10: Leitung
- 11: Switch
- 12: Zentrale Auswerteeinheit
- 13: Zentrale Überwachungsstelle
- 14: Datenleitung

## Patentansprüche

1. Durchführungsgehäuse für den Einbau in einen Wagon eines Zuges,
- wobei das Durchführungsgehäuse (1) zumindest eine Steckschnittstelle (4) aufweist, die Steckverbindermodule (5, 5') aufweist, wobei die Steckschnittstelle (4) außerdem zumindest zwei Sensoren, einen ersten Sensor und einen zweiten Sensor, aufweist,
- wobei das Durchführungsgehäuse eine Sensorbox (7) aufweist, welche zumindest zwei Sensoren, einen dritten Sensor und einen vierten Sensor, aufweist.

2. Durchführungsgehäuse nach Anspruch 1
**dadurch gekennzeichnet, dass**
es sich beim ersten Sensor um einen Temperatursensor und beim zweiten Sensor um einen Distanzsensor handelt.

3. Durchführungsgehäuse nach einem der vorstehenden Ansprüche
**dadurch gekennzeichnet, dass**
es sich beim dritten Sensor um einen Vibrations- und Beschleunigungssensor und beim vierten Sensor um einen Feuchtigkeitssensor handelt.

4. Durchführungsgehäuse nach einem der vorstehenden Ansprüche
**dadurch gekennzeichnet, dass**
die Steckschnittstelle (4) und die Sensorbox (7) über eine Datenleitung oder eine Funkverbindung miteinander verbunden sind.

5. Durchführungsgehäuse nach vorstehendem Anspruch
**dadurch gekennzeichnet, dass**
die Sensorbox (7) Mittel aufweist mit denen die Daten des ersten Sensors, des zweiten Sensors, des dritten Sensors und des vierten Sensors erfassbar, speicherbar und weiterversendbar sind.

6. Durchführungsgehäuse nach einem der vorstehenden Ansprüche
**dadurch gekennzeichnet, dass**
der erste und zweite Sensor örtlich vom dritten und vierten Sensor beabstandet sind.

7. Durchführungsgehäuse nach einem der vorstehenden Ansprüche
**dadurch gekennzeichnet, dass**
die Steckschnittstelle (4) des Durchführungsgehäuses einen RFID-Transponder aufweist.
